# EUROPEAN PATENT APPLICATION

(11) **EP 4 707 003 A1**
(43) Date of publication of application: **11.03.2026**
(21) Application number: 25196523.2
(22) Date of filing: 18.08.2025
(51) Int. Cl.: B60H 1/00

(54) **TRANSPORT REFRIGERATION SYSTEM HAVING MULTPLE POWER MODES**

(30) Priority: 30.08.2024 US 202463689134 P
(71) Applicant: Carrier Corporation, Palm Beach Gardens, FL 33418 (US)
(72) Inventor: BEAUFRERE, Florian, 76520 Franqueville Saint Pierre (FR)
(74) Representative: Dehns

(57) **Abstract**

A transport refrigeration system including a transport refrigeration unit (120); an energy storage device (200); an engine system (202) including a generator (205); a power converter (52) configured to receive power from both the energy storage device (200) and the engine system (202); a controller (30) configured to control the power converter (52) to power the transport refrigeration unit (120) in response to a parameter of the energy storage device (200) and a power demand of the transport refrigeration unit (120).

## Description

### BACKGROUND

The invention relates generally to transport refrigeration systems, and more particularly to a transport refrigeration system having multiple power modes.

Typically, cold chain distribution systems are used to transport and distribute cargo, or more specifically perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated vehicles, containers and trailers are commonly used to transport perishable goods in a cold chain distribution system. A transport refrigeration unit is in operative association with a cargo compartment for maintaining a controlled temperature environment within the cargo compartment.

Conventionally, transport refrigeration systems used in connection with refrigerated vehicles, trailers and/or containers include a transportation refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/ gas mixture is drawn from the interior volume of the cargo compartment by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo compartment.

On commercially available transport refrigeration systems, the compressor, and typically other components of the transportation refrigeration unit, must be powered during transit. In mechanically driven transport refrigeration units, the compressor is driven by an engine, either through a direct mechanical coupling or a belt drive, and other components, such as the condenser fan and evaporator fan, are belt driven.

Transport refrigeration systems may also be electrically driven. In an electrically driven transport refrigeration system, a prime mover carried on and considered part of the transport refrigeration system, drives an AC synchronous generator that generates AC power. The generated AC power is used to power an electric motor for driving the refrigerant compressor of the transportation refrigeration unit and to power an electric AC condenser fan motor, an electric AC evaporator fan motor and an electric heater associated with the evaporator.

### BRIEF DESCRIPTION

According to an embodiment, a transport refrigeration system includes a transport refrigeration unit; an energy storage device; an engine system including a generator; a power converter configured to receive power from both the energy storage device and the engine system; a controller configured to control the power converter to power the transport refrigeration unit in response to a parameter of the energy storage device and a power demand of the transport refrigeration unit.

Optionally, the controller is configured to power the transport refrigeration unit solely by the engine system in an engine mode in response to the parameter of the energy storage device being less than a lower parameter threshold, T1.

Optionally, the controller is configured to power the transport refrigeration unit by both the engine system and the energy storage device in a hybrid mode in response to the parameter of the energy storage device being greater than a lower parameter threshold, T1, the parameter of the energy storage device being less than an upper parameter threshold, T2, and the power demand of the transport refrigeration unit being less than a demand threshold, D1.

Optionally, the controller is configured to power the transport refrigeration unit solely by the engine system in an engine mode in response to the parameter of the energy storage device being greater than a lower parameter threshold, T1, the parameter of the energy storage device being less than an upper parameter threshold, T2, and the power demand of the transport refrigeration unit being greater than a demand threshold, D1.

Optionally, the controller is configured to power the transport refrigeration unit solely by the energy storage device in an energy storage device mode when the parameter of the energy storage device is greater than an upper parameter threshold, T2, and the power demand of the transport refrigeration unit is less than a demand threshold, D1.

Optionally, the controller is configured to power the transport refrigeration unit solely by the engine system in an engine mode when the parameter of the energy storage device is greater than an upper parameter threshold, T2, and the power demand of the transport refrigeration unit is greater than 1 demand threshold, D1.

Optionally, the controller is configured to power the transport refrigeration unit solely by the engine system in an engine mode when the power demand of the transport refrigeration unit is greater than a demand threshold, D1.

Optionally, the parameter of the energy storage device includes one or more of state of charge, voltage, state of health and temperature.

Optionally, the parameter of the energy storage device includes state of charge.

Optionally, the transport refrigeration system may include a sensor monitoring an output of the power converter; wherein the controller is configured to determine the power demand of the transport refrigeration unit in response to the sensor.

Optionally, the controller is configured to determine the power demand of the transport refrigeration unit in response to an operating mode of the transport refrigeration unit.

Optionally, the power converter is bi-directional and the controller is configured to charge the energy storage device through the power converter.

Optionally, the power converter includes one of: a dual AC to AC converter; a hybrid DC to AC converter and AC to AC converter; a dual DC to AC inverter; a hybrid AC to AC converter and DC to AC converter; a dual DC to DC converter; a hybrid DC to DC converter and AC to DC converter; a dual AC to DC converter; and a hybrid AC to DC converter and DC to DC converter.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The foregoing and other features and advantages of embodiments are apparent from the following detailed description taken in conjunction with the accompanying drawings in which:
FIG. 1 depicts a transport refrigeration system;
FIG. 2 depicts a transportation refrigeration unit of a transport refrigeration system;
FIG. 3 depicts a transport refrigeration system;
FIGs. 4A-4H depict power converters;
FIG. 5 depicts multiple power modes.

### DETAILED DESCRIPTION

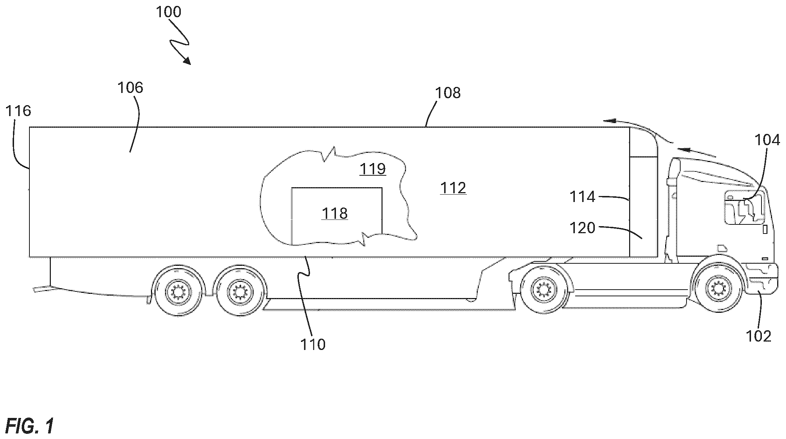

Shown in FIG. 1 is an embodiment of a transport refrigeration system including a tractor-trailer 100. The tractor-trailer 100 includes a tractor 102 including an operator's compartment or cab 104 and an engine (not shown), which acts as the drive system of the tractor 102. A trailer 106 is coupled to the tractor 102. The trailer 106 is a refrigerated trailer 106 and includes a top wall 108, a directly opposed bottom wall 110, opposed side walls 112, and a front wall 114, with the front wall 114 being closest to the tractor 102. The trailer 106 further includes a door or doors (not shown) at a rear wall 116, opposite the front wall 114. The walls of the trailer 106 define a cargo compartment 119. The trailer 106 is configured to maintain cargo 118 located inside the cargo compartment 119 at a selected temperature through the use of a transport refrigeration unit 120 mounted on the trailer 106. The transport refrigeration unit 120, as shown in FIG. 1, is located at or attached to the front wall 114.

In FIG. 1, the cargo compartment 119 is located in the trailer 106. Embodiments described herein are not limited to tractor-trailers, but also may apply to containers having a refrigerated cargo compartment, such as containers transported by road, rail, sea or air. Embodiments described herein may also apply to a refrigerated vehicle (e.g., a truck) having a refrigerated cargo compartment and a transport refrigeration unit mounted thereto.

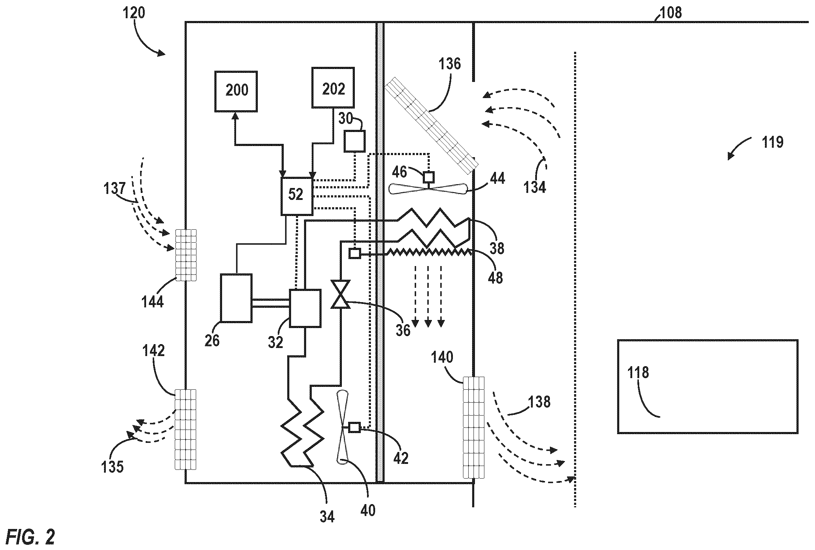

Referring to FIG. 2, the transport refrigeration unit 120 includes a refrigerant compression device 32 (e.g., a compressor), an electric motor 26 for driving the refrigerant compression device 32 and a controller 30. The refrigerant compression device 32 may comprise a single-stage or multiple-stage compressor such as, for example, a reciprocating compressor or a scroll compressor. The refrigerant compression device 32 may be a fixed speed compressor or a variable speed compressor. The transportation refrigeration unit 120 is in operative association with the refrigerated cargo compartment 119 and is configured to provide conditioned air to the cargo compartment 119. The transportation refrigeration unit 120 functions, under the control of the controller 30, to establish and regulate desired environmental parameters, such as, for example temperature, pressure, humidity, carbon dioxide, ethylene, ozone, light exposure, vibration exposure, and other conditions in the cargo compartment 119, as known to one of ordinary skill in the art. In an example embodiment, the transportation refrigeration unit 120 is capable of providing a desired temperature and humidity range.

The transportation refrigeration unit 120 includes a refrigerant compression device 32, a refrigerant heat rejection heat exchanger 34, an expansion device 36 (e.g., a thermostatic expansion valve or an electronic expansion valve), and a refrigerant heat absorption heat exchanger 38 connected in refrigerant flow communication in a closed loop refrigerant circuit and arranged in a conventional refrigeration cycle. The transportation refrigeration unit 120 also includes one or more fans 40 associated with the refrigerant heat rejection heat exchanger 34 and driven by fan motor(s) 42 and one or more fans 44 associated with the refrigerant heat absorption heat exchanger 38 and driven by fan motor(s) 46. The transportation refrigeration unit 120 may also include a heater 48 associated with the refrigerant heat absorption heat exchanger 38. In an embodiment, the heater 48 may be an electric resistance heater. It is to be understood that other components (not shown) may be incorporated into the refrigerant circuit as desired, including for example, but not limited to, a suction modulation valve, a receiver, a filter/dryer, an economizer circuit.

The refrigerant heat rejection heat exchanger 34 may, for example, comprise one or more refrigerant conveying coiled tubes or one or more tube banks formed of a plurality of refrigerant conveying tubes across flow path to the heat outlet 142. The fan(s) 40 are operative to pass air, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the transportation refrigeration unit 120 is operating in a subcritical refrigerant cycle or as a refrigerant gas cooler, such as if the transportation refrigeration unit 120 is operating in a transcritical cycle.

The refrigerant heat absorption heat exchanger 38 may, for example, also comprise one or more refrigerant conveying coiled tubes or one or more tube banks formed of a plurality of refrigerant conveying tubes extending across flow path from a return air inlet 136. The fan(s) 44 are operative to pass air drawn from the refrigerated cargo compartment 119 across the tubes of the refrigerant heat absorption heat exchanger 38 to heat and evaporate refrigerant liquid passing through the tubes and cool the air. The air cooled in traversing the refrigerant heat rejection heat exchanger 38 is supplied back to the refrigerated cargo compartment 119 through a refrigeration unit outlet 140. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

Airflow is circulated into and through the refrigerated cargo compartment 119 by means of the transportation refrigeration unit 120. A return airflow 134 flows into the transportation refrigeration unit 120 from the refrigerated cargo compartment 119 through the refrigeration unit return air intake 136, and across the refrigerant heat absorption heat exchanger 38 via the fan 44, thus conditioning the return airflow 134 to a selected or predetermined temperature. The conditioned return airflow 134, now referred to as supply airflow 138, is supplied into the refrigerated cargo compartment 119 through the refrigeration unit outlet 140. Heat 135 is removed from the refrigerant heat rejection heat exchanger 34 through the heat outlet 142. The transportation refrigeration unit 120 may contain an external air inlet 144, as shown in FIG. 2, to aid in the removal of heat 135 from the refrigerant heat rejection heat exchanger 34 by pulling in external air 137.

The supply airflow 138 may cool the cargo 118 in the refrigerated cargo compartment 119 of the transport container 106. It is to be appreciated that the transportation refrigeration unit 120 can further be operated in reverse to warm the container system 106 when, for example, the outside temperature is very low. In the illustrated embodiment, the return air intake 136, the refrigeration unit outlet 140, the heat outlet 142, and the external air inlet 144 are configured as grilles to help prevent foreign objects from entering the transportation refrigeration unit 120.

The transport refrigeration unit 120 includes a controller 30 configured for controlling the operation of the transport refrigeration unit 120 including, but not limited to, the operation of various components of the transport refrigeration unit 120 to provide and maintain a desired thermal environment within the refrigerated cargo compartment 119. The controller 30 may also be able to selectively operate the electric motor 26. The controller 30 may be an electronic controller including a processor and an associated memory comprising computer-executable instructions that, when executed by the processor, cause the processor to perform various operations. The processor may be but is not limited to a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

An energy storage device 200 provides electrical power to the transportation refrigeration unit 120. Examples of the energy storage device 200 may include a battery system (e.g., a battery or bank of batteries), capacitors, and other devices capable of storing and outputting electric energy, that may be DC power. The energy storage device 200 may include a battery system, which may employ multiple batteries organized into battery banks. The energy storage device 200 may be located within the housing of the transportation refrigeration unit 120 or may be mounted outside of the transportation refrigeration unit 120, e.g. on the trailer 106.

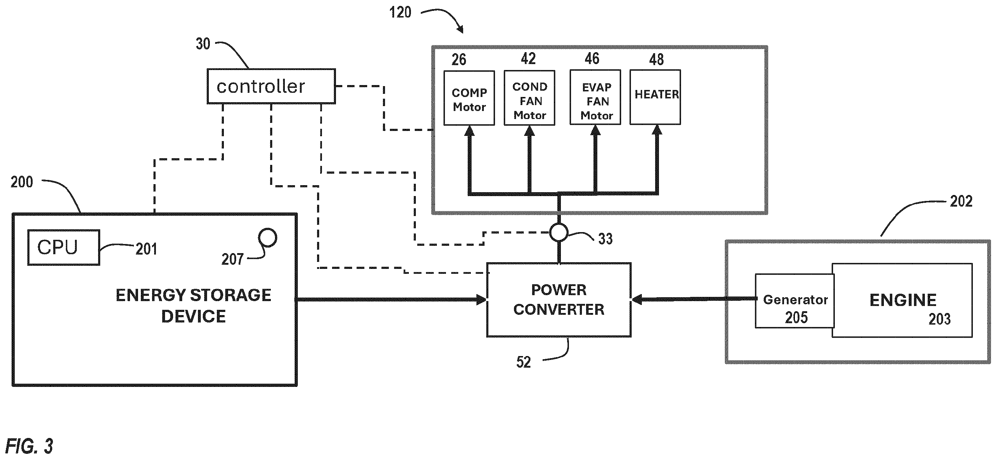

An engine system 202 provides electrical power to the transportation refrigeration unit 120. The engine system 202 includes an engine 203 and a generator 205 (FIG. 3). The engine 203 may be a fuel powered engine (e.g., diesel power engine) which drives the generator 205 to produce electricity. The engine system 202 may be located within the housing of the transportation refrigeration unit 120 or may be mounted outside of the transportation refrigeration unit 120, e.g. on the trailer 106.

The transportation refrigeration unit 120 has a plurality of electrical power demand loads, including, but not limited to, the electric motor 26 for driving the refrigerant compression device 32, the motor(s) 42 for the fan(s) 40 associated with the refrigerant heat rejection heat exchanger 34, and the motor(s) 46 for the fan(s) 44 associated with the refrigerant heat absorption heat exchanger 38 and the controller 30. As each of the fan motors 42, 46 and the electric motor 26 may be an AC motor or a DC motor, one or more power converters 52, such as AC to DC rectifiers, DC to AC inverters, AC to AC converters, and DC to DC converters, may be employed to supply power from the energy storage device 200 and/or the engine system 202 to power demand loads, as appropriate.

The electric resistance heater 48 may be powered by the energy storage device 200 and/or the engine system 202, and selectively operated by the controller 30 whenever a control temperature within the cargo compartment 119 drops below a preset lower temperature limit, which may occur in a cold ambient environment. In such an event, the controller 30 activates the heater 48 to heat air circulated over the heater 48 by the fan(s) 44 associated with the refrigerant heat absorption heat exchanger 38. The heater 48 may also be used to de-ice the return air intake 136 or defrost the refrigerant heat absorption heat exchanger 38.

FIG. 3 shows the energy storage device 200 and the engine system 202 powering a transport refrigeration unit 120. The energy storage device 200 includes a controller 201 (e.g., a processor-based controller) and a sensor 207, e.g., a state of charge (SoC) sensor. The sensor 207 monitors one or more parameters of the energy storage device 200, such as SoC, State of Health (SoH), voltage, temperature, etc. The controller 201 manages the operations of the energy storage device 200 (e.g., as a battery management system or BMS), while the sensor 207 monitors one or more parameters within the energy storage device 200. The energy storage device 200 supplies power to the power converter 52. The energy storage device 200 may produce a DC output, or the energy storage device 200 may produce a AC output using an internal or external inverter.

The engine system 202 comprises an engine 203 and a generator 205. The engine 203 drives the generator 205 to produce electrical power, which is then supplied to the power converter 52. The engine 203 may be a fuel powered engine, such as a diesel engine. The engine system 202 may produce a AC output, or the engine system 202 may produce a DC output using an internal or external rectifier.

The power converter 52 can receive power from both the energy storage device 200 and the engine system 202. The controller 30 can control the power converter 52 to apportion the amount of power from the energy storage device 200 and the amount of power from the engine system 202 supplied to the transport refrigeration unit 120. The controller 30 may send commands to the power converter 52 to control the power converter 52 to supply power from only the energy storage device 200, supply power from only the engine system 202 or supply power from both the energy storage device 200 and the engine system 202.

The power converter 52 converts the received power into a form suitable for use by the refrigeration unit 120. The refrigeration unit 120 includes a compressor 26, a condenser fan motor 42, an evaporator fan motor 46, and a heater 48. The power converter 52 distributes the converted power to one or more of these components within the refrigeration unit 120.

The controller 30 is connected to the energy storage device 200, the power converter 52, and the refrigeration unit 120. The controller 30 manages the distribution of power and ensures the efficient operation of the entire system. A power sensor 33 is positioned between the power converter 52 and the transport refrigeration unit 120 to monitor the power flow (e.g. voltage and/or current) at an output of the power converter 52 to the transport refrigeration unit 120.

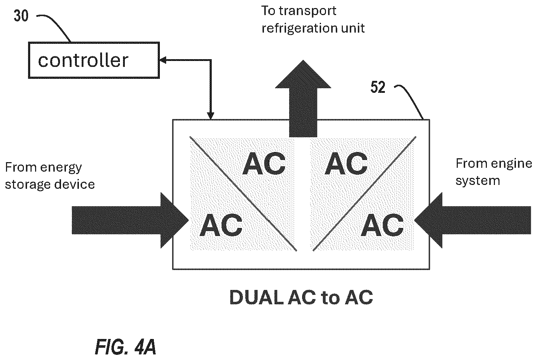

FIG. 4A shows the controller 30 and a power converter 52 in the form of a dual transformer 52, also referred to as a dual AC to AC converter. The dual transformer 52 receives power from two sources, namely AC power from the energy storage device 200 and AC power from the engine system 202. The dual transformer 52 converts these two AC inputs to an AC output to provide AC power to the transport refrigeration unit 120. The controller 30 manages the operation of the dual transformer 52, ensuring the appropriate distribution and conversion of power from the energy storage device 200 and the engine system 202. The dual transformer 52 facilitates the efficient and reliable provision of power to the transport refrigeration unit 120. The controller 30 may send commands to the power converter 52 to supply power to the transport refrigeration unit 120 (i) from only the energy storage device 200, (ii) from only the engine system 202 or (iii) from both the energy storage device 200 and the engine system 202.

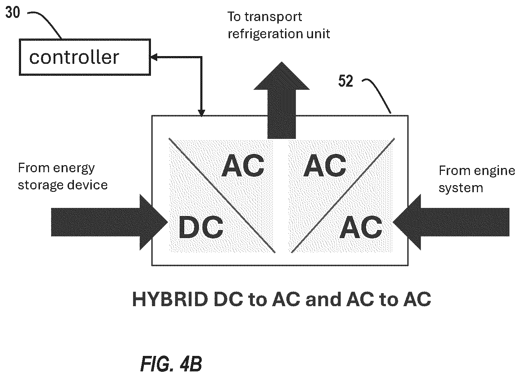

FIG. 4B shows the controller 30 and a power converter 52 in the form of a hybrid DC to AC converter and AC to AC converter. The hybrid power converter 52 receives power from two sources, namely DC power from the energy storage device 200 and AC power from the engine system 202. The hybrid DC to AC and AC to AC converter 52 converts the DC input and the AC input to an AC output to provide AC power to the transport refrigeration unit 120. The controller 30 manages the operation of the hybrid DC to AC and AC to AC converter 52, ensuring the appropriate distribution and conversion of power from the energy storage device 200 and the engine system 202. The hybrid DC to AC and AC to AC converter 52 facilitates the efficient and reliable provision of power to the transport refrigeration unit 120. The controller 30 may send commands to the power converter 52 to supply power to the transport refrigeration unit 120 (i) from only the energy storage device 200, (ii) from only the engine system 202 or (iii) from both the energy storage device 200 and the engine system 202.

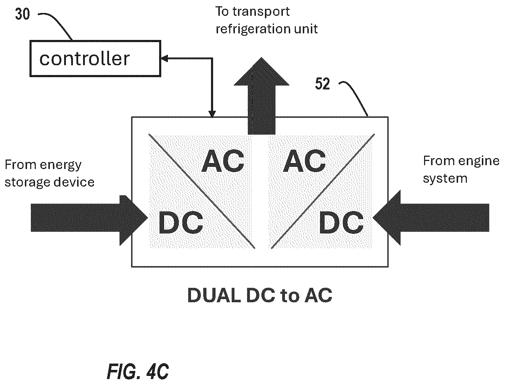

FIG. 4C shows the controller 30 and a power converter 52 in the form of a dual inverter 52, also referred to as a dual DC to AC inverter. The dual inverter 52 receives power from two sources, namely DC power from the energy storage device 200 and DC power from the engine system 202. The dual inverter 52 converts these two DC inputs to an AC output to provide AC power to the transport refrigeration unit 120. The controller 30 manages the operation of the dual inverter 52, ensuring the appropriate distribution and conversion of power from the energy storage device 200 and the engine system 202. The dual inverter 52 facilitates the efficient and reliable provision of power to the transport refrigeration unit 120. The controller 30 may send commands to the power converter 52 to supply power to the transport refrigeration unit 120 (i) from only the energy storage device 200, (ii) from only the engine system 202 or (iii) from both the energy storage device 200 and the engine system 202.

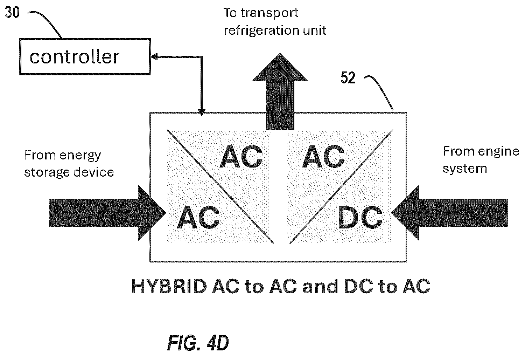

FIG. 4D shows the controller 30 and a power converter 52 in the form of a hybrid AC to AC converter and DC to AC converter. The hybrid power converter 52 receives power from two sources, namely AC power from the energy storage device 200 and DC power from the engine system 202. The hybrid AC to AC and DC to AC converter 52 converts the AC input and the DC input to an AC output to provide AC power to the transport refrigeration unit 120. The controller 30 manages the operation of the hybrid AC to AC and DC to AC converter 52, ensuring the appropriate distribution and conversion of power from the energy storage device 200 and the engine system 202. The hybrid AC to AC and DC to AC converter 52 facilitates the efficient and reliable provision of power to the transport refrigeration unit 120. The controller 30 may send commands to the power converter 52 to supply power to the transport refrigeration unit 120 (i) from only the energy storage device 200, (ii) from only the engine system 202 or (iii) from both the energy storage device 200 and the engine system 202.

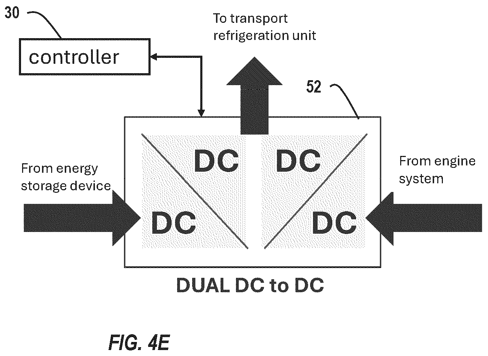

FIG. 4E shows the controller 30 and a power converter 52 in the form of a dual converter 52, also referred to as a dual DC to DC converter. The dual converter 52 receives power from two sources, namely DC power from the energy storage device 200 and DC power from the engine system 202. The dual converter 52 converts these two DC inputs to a DC output to provide DC power to the transport refrigeration unit 120. The controller 30 manages the operation of the dual converter 52, ensuring the appropriate distribution and conversion of power from the energy storage device 200 and the engine system 202. The dual converter 52 facilitates the efficient and reliable provision of power to the transport refrigeration unit 120. The controller 30 may send commands to the power converter 52 to supply power to the transport refrigeration unit 120 (i) from only the energy storage device 200, (ii) from only the engine system 202 or (iii) from both the energy storage device 200 and the engine system 202.

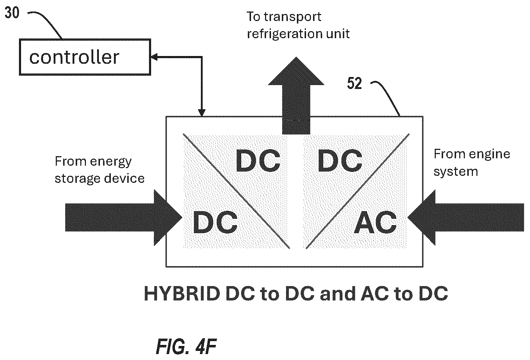

FIG. 4F shows the controller 30 and a power converter 52 in the form of a hybrid DC to DC converter and AC to DC converter. The hybrid power converter 52 receives power from two sources, namely DC power from the energy storage device 200 and AC power from the engine system 202. The hybrid DC to AC and AC to DC converter 52 converts the DC input and the AC input to an DC output to provide DC power to the transport refrigeration unit 120. The controller 30 manages the operation of the hybrid DC to DC converter and AC to DC converter 52, ensuring the appropriate distribution and conversion of power from the energy storage device 200 and the engine system 202. The hybrid DC to DC converter and AC to DC converter 52 facilitates the efficient and reliable provision of power to the transport refrigeration unit 120. The controller 30 may send commands to the power converter 52 to supply power to the transport refrigeration unit 120 (i) from only the energy storage device 200, (ii) from only the engine system 202 or (iii) from both the energy storage device 200 and the engine system 202.

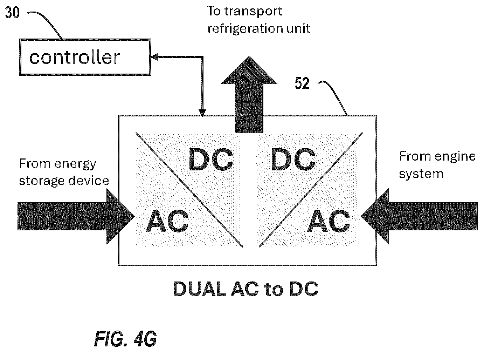

FIG. 4G shows the controller 30 and a power converter 52 in the form of a dual rectifier 52, also referred to as a dual AC to DC converter. The dual rectifier 52 receives power from two sources, namely AC power from the energy storage device 200 and AC power from the engine system 202. The dual rectifier 52 converts these two AC inputs to a DC output to provide DC power to the transport refrigeration unit 120. The controller 30 manages the operation of the dual rectifier 52, ensuring the appropriate distribution and conversion of power from the energy storage device 200 and the engine system 202. The dual rectifier 52 facilitates the efficient and reliable provision of power to the transport refrigeration unit 120. The controller 30 may send commands to the power converter 52 to supply power to the transport refrigeration unit 120 (i) from only the energy storage device 200, (ii) from only the engine system 202 or (iii) from both the energy storage device 200 and the engine system 202.

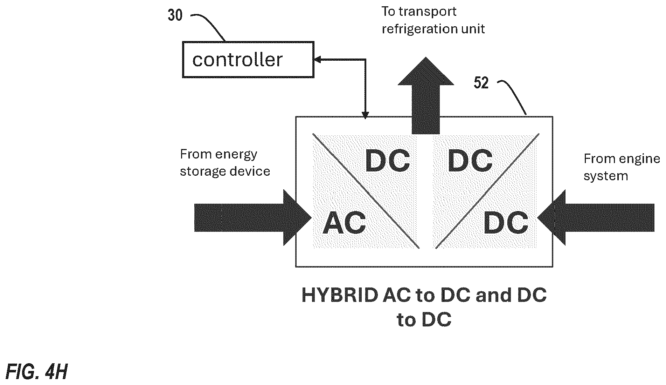

FIG. 4H shows the controller 30 and a power converter 52 in the form of a hybrid AC to DC converter and DC to DC converter. The hybrid power converter 52 receives power from two sources, namely AC power from the energy storage device 200 and DC power from the engine system 202. The hybrid AC to DC and DC to DC converter 52 converts the AC input and the DC input to a DC output to provide DC power to the transport refrigeration unit 120. The controller 30 manages the operation of the hybrid AC to DC converter and DC to DC converter 52, ensuring the appropriate distribution and conversion of power from the energy storage device 200 and the engine system 202. The hybrid AC to DC converter and DC to DC converter 52 facilitates the efficient and reliable provision of power to the transport refrigeration unit 120. The controller 30 may send commands to the power converter 52 to supply power to the transport refrigeration unit 120 (i) from only the energy storage device 200, (ii) from only the engine system 202 or (iii) from both the energy storage device 200 and the engine system 202.

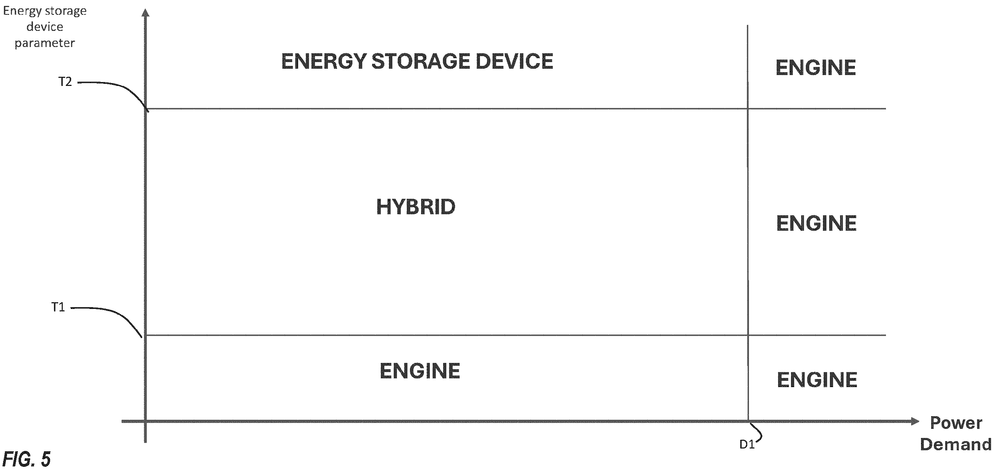

FIG. 5 illustrates different operating modes of the transport refrigeration system. The different operating modes may be entered and exited under control of the controller 30. FIG. 5 shows energy storage device mode, hybrid mode, and engine mode in dependence on a parameter of the energy storage device 200 (y-axis) and power demand of the transport refrigeration unit 120 (x-axis).

The parameter of the energy storage device 200 may be state of charge (SoC), or another parameter such as voltage, temperature, etc., determined by the controller 30 from the sensor 207. Alternatively, the parameter of the energy storage device 200 may be communicated from controller 201 to controller 30. The power demand of the transport refrigeration unit 120 may be determined in multiple ways. The power demand of the transport refrigeration unit 120 may be determined by the controller 30 based on power sensed by the power sensor 33. The power demand of the transport refrigeration unit 120 may be determined by the controller 30 obtaining the operating mode of the transport refrigeration unit 120. For example, pull down mode of the transport refrigeration unit 120 requires more power than standby mode.

Referring to FIG. 5, when the parameter of energy storage device 200 is less than a lower parameter threshold, T1, the transport refrigeration unit 120 is powered solely by the engine system 202, regardless of the power demand of the transport refrigeration unit 120. This is shown by the engine mode in the lower portion of FIG. 5. The controller 30 sends a command to the power converter 52 to supply power to the transport refrigeration unit 120 from only the engine system 202.

When the parameter of energy storage device 200 is greater than a lower parameter threshold, T1, and less than an upper parameter threshold, T2, and the power demand of the transport refrigeration unit 120 is less than a demand threshold, D1, the transport refrigeration unit 120 is powered by a combination of the energy storage device 200 and the engine system 202. This is shown by the hybrid mode in the center portion of FIG. 5. The controller 30 sends a command to the power converter 52 to supply power to the transport refrigeration unit 120 from both the energy storage device 200 and the engine system 202.

When the parameter of energy storage device 200 is greater than a lower parameter threshold, T1, and less than an upper parameter threshold, T2, and the power demand of the transport refrigeration unit 120 is greater than the demand threshold, D1, the transport refrigeration unit 120 is powered solely by the engine system 202. This is shown by the engine mode in the center portion of FIG. 5. The controller 30 sends a command to the power converter 52 to supply power to the transport refrigeration unit 120 from only the engine system 202.

When the parameter of energy storage device 200 is greater than the upper parameter threshold, T2, and the power demand of the transport refrigeration unit 120 is less than the demand threshold, D1, the transport refrigeration unit 120 is powered by solely by the energy storage device 200. This is shown by the energy storage device mode in the upper portion of FIG. 5. The controller 30 sends a command to the power converter 52 to supply power to the transport refrigeration unit 120 from only the energy storage device 200.

When the parameter of energy storage device 200 is greater than the upper parameter threshold, T2, and the power demand of the transport refrigeration unit 120 is greater than the demand threshold, D1, the transport refrigeration unit 120 is powered by solely by the engine system 202. This is shown by the engine mode in the upper, right portion of FIG. 5. The controller 30 sends a command to the power converter 52 to supply power to the transport refrigeration unit 120 from only the engine system 202.

The power converter 52 may operate in a bi-directional manner, allowing power to be supplied to the energy storage device 200 for charging the energy storage device 200. The power converter 52 may include a connection to an AC power grid, also referred to as shore power. Charging mode may be activated by the controller 30 when conditions indicate that shore power is available, allowing the AC power grid to charge the energy storage device 200. Charging mode may be activated by the controller 30 when conditions indicate a low load on the engine system 202, allowing the engine system 202 to charge the energy storage device 200.

As described above, embodiments can be in the form of processor-implemented processes and devices for practicing those processes, such as a controller 30. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the disclosed embodiments can be modified to incorporate any number of variations, alterations, substitutions, combinations, sub-combinations, or equivalent arrangements not heretofore described, but which are within with the scope of the present invention, as defined by the appended claims. Additionally, while various embodiments of the present invention have been described, it is to be understood that the present invention may include only some of the described embodiments. Accordingly, the present invention is not to be seen as limited by the foregoing description, but is only limited by the scope of the appended claims.

## Claims

1. A transport refrigeration system, comprising:
a transport refrigeration unit (120);
an energy storage device (200);
an engine system (202) including a generator (205);
a power converter (52) configured to receive power from both the energy storage device and the engine system;
a controller (30) configured to control the power converter to power the transport refrigeration unit in response to a parameter of the energy storage device and a power demand of the transport refrigeration unit.

2. The transport refrigeration system of claim 1, wherein the controller is configured to power the transport refrigeration unit solely by the engine system in an engine mode in response to the parameter of the energy storage device being less than a lower parameter threshold, T1.

3. The transport refrigeration system of any preceding claim, wherein the controller is configured to power the transport refrigeration unit by both the engine system and the energy storage device in a hybrid mode in response to the parameter of the energy storage device being greater than a lower parameter threshold, T1, the parameter of the energy storage device being less than an upper parameter threshold, T2, and the power demand of the transport refrigeration unit being less than a demand threshold, D1.

4. The transport refrigeration system of any preceding claim, wherein the controller is configured to power the transport refrigeration unit solely by the engine system in an engine mode in response to the parameter of the energy storage device being greater than a lower parameter threshold, T1, the parameter of the energy storage device being less than an upper parameter threshold, T2, and the power demand of the transport refrigeration unit being greater than a demand threshold, D1.

5. The transport refrigeration system of any preceding claim, wherein the controller is configured to power the transport refrigeration unit solely by the energy storage device in an energy storage device mode when the parameter of the energy storage device is greater than an upper parameter threshold, T2, and the power demand of the transport refrigeration unit is less than a demand threshold, D1.

6. The transport refrigeration system of any preceding claim, wherein the controller is configured to power the transport refrigeration unit solely by the engine system in an engine mode when the parameter of the energy storage device is greater than an upper parameter threshold, T2, and the power demand of the transport refrigeration unit is greater than 1 demand threshold, D1.

7. The transport refrigeration system of any preceding claim, wherein the controller is configured to power the transport refrigeration unit solely by the engine system in an engine mode when the power demand of the transport refrigeration unit is greater than a demand threshold, D1.

8. The transport refrigeration system of any preceding claim, wherein the parameter of the energy storage device includes one or more of a state of charge, a voltage, a state of health and a temperature.

9. The transport refrigeration system of claim 8, wherein the parameter of the energy storage device includes a state of charge.

10. The transport refrigeration system of any preceding claim, further comprising a sensor (33) monitoring an output of the power converter;
wherein the controller is configured to determine the power demand of the transport refrigeration unit in response to the sensor.

11. The transport refrigeration system of any preceding claim, wherein the controller is configured to determine the power demand of the transport refrigeration unit in response to an operating mode of the transport refrigeration unit.

12. The transport refrigeration system of any preceding claim, wherein the power converter is bi-directional and the controller is configured to charge the energy storage device through the power converter.

13. The transport refrigeration system of any preceding claim, wherein the power converter includes one of:
a dual AC to AC converter;
a hybrid DC to AC converter and AC to AC converter;
a dual DC to AC inverter;
a hybrid AC to AC converter and DC to AC converter;
a dual DC to DC converter;
a hybrid DC to DC converter and AC to DC converter;
a dual AC to DC converter; and
a hybrid AC to DC converter and DC to DC converter.
